Europäisches Patentamt

European Patent Office

Office européen des brevets

(11) Veröffentlichungsnummer : **0 397 001 B1**

(12) **EUROPÄISCHE PATENTSCHRIFT**

(45) Veröffentlichungstag der Patentschrift :
25.08.93 Patentblatt 93/34

(51) Int. Cl.⁵ : **C08J 9/16,** C08L 51/04,
C08F 283/00

(21) Anmeldenummer : 90108204.0

(22) Anmeldetag : 30.04.90

(54) **Expandierbare Styrolpolymerisate.**

(30) Priorität : **12.05.89 DE 3915602**

(43) Veröffentlichungstag der Anmeldung :
**14.11.90 Patentblatt 90/46**

(45) Bekanntmachung des Hinweises auf die
Patenterteilung :
**25.08.93 Patentblatt 93/34**

(84) Benannte Vertragsstaaten :
**AT BE DE ES FR GB IT NL**

(56) Entgegenhaltungen :
EP-A- 0 379 084
DE-A- 1 939 696
DE-A- 2 237 491
FR-A- 2 264 040
US-A- 2 965 593
US-A- 3 461 188
CHEMICAL ABSTRACTS, Band 91, Nr. 18, Oktober 1979, Seite 27, Zusammenfassung Nr.
141631x, Columbus, Ohio, US; & JP-A-79 63
192 (SEKISUI KASEIHIN KOGYO K.K.) 21-
05-1979

(56) Entgegenhaltungen :
IDEM
CHEMICAL ABSTRACTS, Band 16, Nr. 93, 20.
Oktober 1980, Seite 23, Zusammenfassung Nr.
150967e, Columbus, Ohio, US; Y.S. LIPATOV et
al.: "Study of microphase separation in interpenetrating polymeric networks obtained from
polyurethane and a copolymer of styrene with
divinylbenzene"

(73) Patentinhaber : **BASF Aktiengesellschaft**
**Carl-Bosch-Strasse 38**
**D-67063 Ludwigshafen (DE)**

(72) Erfinder : **Wittenberg, Dietmar, Dr.**
**Rheindammstrasse 28**
**D-6800 Mannheim 1 (DE)**
Erfinder : **Hahn, Klaus, Dr.**
**Im Buegen 9**
**D-6719 Kirchheim (DE)**
Erfinder : **Guhr, Uwe, Dr.**
**Beim Hochgericht 9**
**D-6718 Gruenstadt (DE)**
Erfinder : **Hintz, Hans, Dr.**
**Wolframstrasse 4**
**D-6700 Ludwigshafen (DE)**

## Beschreibung

Die Erfindung betrifft neuartige expandierbare Styrolpolymerisate, die zur Herstellung von elastischen Schaumstoffen geeignet sind.

Schaumstoffe auf Basis von Styrolpolymerisaten haben als Wärmedämm- und Verpackungsmaterial eine große technische Bedeutung erlangt. Sie werden großtechnisch dadurch hergestellt, daß man zunächst durch Suspensionspolymerisation von Styrol in Gegenwart eines Treibmittels expandierbare Styrolpolymerisate herstellt, diese durch Erhitzen zu Schaumstoffpartikeln aufschäumt und anschließend in Formen zu Formteilen verschweißt.

Polystyrolschaumstoffe sind harte Schaumstoffe. Der Erfindung liegt die Aufgabe zugrunde, die Elastizität der Polystyrolschaumstoffe zu erhöhen und einen Rohstoff für die Herstellung von elastischen Polystyrolschaumstoffen bereitzustellen. Überraschenderweise wurde nun gefunden, daß durch die Beimischung von im wesentlichen unvernetzten styrollöslichen Elastomeren diese Aufgaben erfüllt werden.

Aus der EP-A-0 217 516 sind treibmittelhaltige expandierbare Teilchen einer polyvinyl(iden)aromatischen Verbindung bekannt, die 0,8 bis 2,6 % an bestimmten Weichmachern enthalten. Gegebenenfalls wird bei der Suspensionspolymerisation von Styrol eine geringe Menge an Kautschuk mitverwendet. Bevorzugte Kautschuke sind Polybutadien, Polyisopren, Polyisobutylen, Styrol/Butadien-Blockcopolymere oder andere Copolymere mit einem relativ hohen Butadiengehalt.

Die in der EP-A-0 217 516 verwendeten Dienpolymeren führen zu Pfropfpolymerisaten, in denen keine styrollöslichen Elastomeren mehr enthalten sind. Außerdem fehlen jegliche Angaben über den Vernetzungsgrad des Elastomeren.

Gegenstand der Erfindung sind somit expandierbare Styrolpolymerisate, enthaltend

a) 50 bis 98 Gew.-% Polystyrol und/oder eines Styrolcopolymerisats mit mindestens 50 Gew.-% einpolymerisiertem Styrol

b) 2 bis 50 Gew.-% eines styrollöslichen Elastomeren

c) 1 bis 15 Gew.-%, bezogen auf die Summe von a) und b), eines niedrigsiedenden Treibmittels und gegebenenfalls

d) übliche Zusatzstoffen in wirksamen Mengen,

wobei Komponente (b) ein Ethylen-Propylen-Kautschuk, Polyisobutylenkautschuk, Polyvinylether-Kautschuk, Acrylat-Kautschuk, Silikon-Kautschuk oder ein Polyurethan-Elastomeres ist, im wesentlichen unvernetzt ist und eine Glasübergangstemperatur unter 0°C aufweist.

Gegenstand der Erfindung sind ferner Schaumstoffe der Dichte 0,01 bis 0,1 g/cm³, enthaltend

a) 50 bis 98 Gew.-% Polystyrol oder eines Styrolcopolymerisats mit mindestens 50 Gew.-% einpolymerisiertem Styrol

b) 2 bis 50 Gew.-% eines styrollöslichen Elastomeren sowie gegebenenfalls

c) übliche Zusatzstoffe in wirksamen Mengen,

wobei Komponente (b) ein Ethylen-Propylen-Kautschuk, Polyisobutylenkautschuk, Polyvinylether-Kautschuk, Acrylat-Kautschuk, Silikon-Kautschuk oder ein Polyurethan-Elastomeres ist, im wesentlichen unvernetzt ist und eine Glasübergangstemperatur unter 0°C aufweist.

Als Hauptkomponente a) enthalten die neuen Produkte 50 bis 98 Gew.-%, vorzugsweise 50 bis 90 Gew.-%, insbesondere 70 bis 85 Gew.-% Polystyrol und/oder ein Styrolcopolymerisat mit mindestens 50 Gew.-%, vorzugsweise mindestens 80 Gew.-% einpolymerisiertem Polystyrol. Als Comonomere kommen z.B. in Frage $\alpha$-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylcarbazol und Maleinsäure(anhydrid). Vorteilhaft enthält das Polystyrol eine geringe Menge eines Vernetzers einpolymerisiert, d.h. einer Verbindung mit mehr als einer, vorzugsweise 2 Doppelbindungen, wie Divinylbenzol, Butadien oder Butandioldiacrylat. Der Vernetzer wird im allgemeinen in Mengen von 0,005 bis 0,05 mol-%, bezogen auf Styrol, verwendet.

Zur Erzielung einer besonders hohen Expandierbarkeit ist es zweckmäßig, daß das Styrolpolymerisat ein mittleres Molekulargewicht $M_w$ (Gewichtsmittel), gemessen nach der GPC-Methode, zwischen 100 000 und 200 000 aufweist, insbesondere zwischen 130 000 und 180 000. Verbesserte Verarbeitungseigenschaften weist der Schaumstoff dann auf, wenn die hochmolekulare Flanke des nach der GPC-Methode gemessenen Molekulargewichtsteilungskurve so steil ist, daß die Differenz der Mittelwerte ($M_{Z+1}$-$M_Z$) weniger als 150 000 beträgt. Die GPC-Methode ist beschrieben in G. Glöckler, Polymercharakterisierung, Chromatographische Methoden Band 17, Hüthig-Verlag, Heidelberg 1982. Die genannten Mittelwerte sind beschrieben in H.G. Elias, Makromoleküle, Hüthig-Verlag, Heidelberg 1971, Seiten 52-64.

Styrolpolymerisate, die die oben genannten mittleren Molgewichte aufweisen können durch Mitverwendung von Reglern bei der Polymerisation erhalten werden. Als Regler verwendet man zweckmäßig 0,01 bis 1,5 Gew.%, vorzugsweise 0,01 bis 0,5 Gew.%, einer bromfreien organischen Verbindung mit einer Kettenübertragungskonstante K zwischen 0,1 und 50. Zweckmäßig wird der Regler während der Polymerisation erst bei einem Umsatz von 20 bis 90 % zugefügt, um eine steile hochmolekulare Flanke der Molekulargewichtsverteilungskurve zu erzielen.

Ein vorteilhaftes hohes Expansionsvermögen läßt sich auch dadurch erzielen, daß die Komponente a) 0,1 bis 10 Gew.%, vorteilhaft 0,5 bis 10 Gew.-%, eines Styrolpolymeren mit einem mittleren Molekulargewicht (Gewichtsmittel) zwischen 500 und 5 000 enthält.

Weitere Details der Molekulargewichtsregelung bei der Herstellung expandierbarer Styrolpolymerisate sind der EP-B 106 129 zu entnehmen.

Styrolpolymerisate, die 0,1 bis 2 Gew.%, vorzugsweise 0,15 bis 1,5 Gew.%, einpolymerisiertes Acrylnitril enthalten, führen zu Schaumstoffen, die sich durch weitgehende Schrumpffreiheit auszeichnen. Auch ein Gemisch aus 95 bis 99,5 Gew.% Polystyrol und 0,5 bis 5 Gew.% eines styrollöslichen Styrol-Acrylnitril-Copolymeren zeigt diese Eigenschaften, wenn der Gesamtgehalt an Acrylnitril im Gemisch 0,1 bis 2 Gew.%, vorzugsweise 0,15 bis 2 Gew.% beträgt.

Styrolpolymerisate, die 3 bis 20 Gew.%, vorzugsweise 5 bis 15 Gew.% einpolymerisierbares Acrylnitril enthalten, führen zu Schaumstoffen mit hoher Ölbeständigkeit. Auch ein Gemisch aus 50 bis 85 Gew.% Polystyrol und 15 bis 50 Gew.% eines styrollöslichen Styrol-Acrylnitril-Copolymeren zeigt diese vorteilhafte Eigenschaft, wenn der Gesamtgehalt an Acrylnitril im Gemisch 3 bis 20 Gew.%, vorzugsweise 5 bis 15 Gew.%, beträgt. Die Herstellung derartiger Mischungen erfolgt auf einfache Weise dadurch, daß man vor der Polymerisation die vorgesehene Menge des Styrol-Acrylnitril-Copolymeren in Styrol löst.

Styrolpolymerisate, die 2 bis 15 Gew.%, insbesondere 3 bis 12 Gew.%, Maleinsäure(anhydrid) als Comonomeres enthalten, führen zu Schaumstoffen, die sich durch hohe Wärmeformbeständigkeit auszeichnen. Vorteilhaft geht man dabei von einem Gemisch aus Polystyrol und einem handelsüblichen Styrol-Maleinsäureanhydrid-Copolymeren mit einem Maleinsäureanhydridgehalt von 15 bis 49 Gew.% aus, das durch Lösen des Copolymeren in Styrol und anschließende Polymerisation leicht hergestellt werden kann.

Als weitere Komponente b) enthalten die Produkte ein styrollösliches Elastomeres in einer Menge von 2 bis 5° Gew.-%, vorzugsweise 5 bis 40 Gew.-%, insbesondere 10 bis 30 Gew.-%. Das Elastomere ist ein Ethylen-Propylen-Kautschuk, der gegebenenfalls geringe Mengen eines Diens einpolymerisiert enthält, Polyisobutylen, styrollöslicher Vinylether-Kautschuk, Acrylatkautschuk, insbesondere auf Basis von $C_2$- bis $C_8$-Alkylacrylaten, styrollöslicher Silikon-Kautschuk oder styrollösliches Polyurethan-Elastomeres, im wesentlichen unvernetzt, d.h. der Vernetzungsgrad ist so gering, daß die Löslichkeit in Styrol dadurch nicht beeinträchtigt ist. Elastomere, deren Gel-Gehalt 10 Gew.-% nicht übersteigt, gelten dabei noch als im wesentlichen unvernetzt und sind gut geeignet als Zusatzstoff. Das Elastomere weist eine Glasübergangstemperatur unter 0°C, vorzugsweise unter -10°C, insbesondere unter -20°C auf.

Die expandierbaren Styrolpolymerisate enthalten in homogener Verteilung als Komponente c) 1 bis 15 Gew.-%, vorzugsweise 2 bis 10 Gew.-%, vorzugsweise 3 bis 8 Gew.-% eines niedrig siedenden Treibmittels. Die Treibmittel sollen das Polystyrol nicht lösen, aber in Polystyrol löslich sein. Der Siedepunkt soll unter dem Erweichungspunkt des Polystyrols liegen. Geeignete Treibmittel sind beispielsweise Propan, Butan, Pentan, Hexan, Cyclopentan, Cyclohexan, Octan, Dichlordifluormethan, Trifluorchlormethan und 1,1,1-Difluorchlorethan. Vorzugsweise wird Pentan verwendet.

Die expandierbaren Styrolpolymerisate können ferner übliche Zusatzstoffe in wirksamen Mengen enthalten, wie Farbstoffe, Füllstoffe, Stabilisatoren, Flammschutzmittel, Synergisten, Keimbildner, Gleitmittel, Antistatika, beim Verschäumen antiverklebend wirkende Stoffe und Mittel zur Verkürzung der Entformzeit beim Ausschäumen.

Als Zusatzstoffe sind auch Poly-(2,6-dimethyl)-1,4-phenylenether und Poly-1,4-phenylensulfid geeignet. In Mengen von 1 bis 20 Gew.%, bezogen auf die Komponente a) bewirken diese Zusätze eine Erhöhung der Wärmeformbeständigkeit des Schaumstoffs.

Die expandierbaren Styrolpolymerisate liegen im allgemeinen in Form von Partikeln, d.h. in Perlform, Granulatform oder in Form von Brocken vor und haben vorteilhaft einen mittleren Durchmesser von 0,1 bis 6 mm, insbesondere 0,4 bis 3 mm.

Die Herstellung kann beispielsweise durch Vermischen der Komponenten in der Schmelze in einem Extruder erfolgen, wobei der Strang nach dem Auspressen so rasch abgekühlt wird, daß kein Aufschäumen erfolgt, und anschließend zerkleinert wird.

Vorteilhaft erfolgt die Herstellung durch Suspensionspolymerisation in an sich bekannter Weise. Dazu wird das Elastomere und gegebenenfalls die Zusatzstoffe in Styrol gelöst und diese Lösung in wäßriger Suspension polymerisiert. Vorteilhaft setzt man bei der Polymerisation einen Regler oder eine geringe Menge, etwa 0,005 bis 0,05 Mol-%, bezogen auf Styrol, eines Vernetzers zu. Das Treibmittel kann dabei bei der Polymerisation mit vorgelegt werden oder im Laufe der Polymerisation zugefügt werden. Es kann auch erst nach beendeter Polymerisation dem Ansatz zugefügt werden.

Die erhaltenen perlförmigen expandierbaren Styrolpolymerisate werden danach von der wäßrigen Phase abgetrennt, gewaschen und getrocknet.

Für die Herstellung von Schaumstoffen werden die expandierbaren Styrolpolymerisate in bekannter Weise durch Erhitzen auf Temperaturen oberhalb ihres Erweichungspunkts, beispielsweise mit Heißluft oder vorzugsweise mit Dampf expandiert. Die erhaltenen Schaumstoffpartikel können nach dem Abkühlen und gegebenenfalls einer Zwischenlagerung durch erneutes Erhitzen weiter aufgeschäumt werden. Sie können anschließend in bekannter Weise in nicht gasdicht schließenden Formen zu Formteilen verschweißt werden.

Die erhaltenen Schaumstoffe weisen eine Dichte von etwa 0,01 bis 0,1 g/cm³ auf. Auf Grund ihrer Elastizität finden sie insbesondere Verwendung für stoßdämpfende Verpackungen, als Kernmaterial für Kraftfahrzeugstoßstangen, zur Innenauskleidung von Kraftfahrzeugen, als Polstermaterial, sowie als Wärme- und Schalldämmaterial.

Die in den Beispielen genannten Teile sind Gewichtsteile.

Beispiel 1

In einem druckfesten Rührkessel wurde eine Mischung aus 200 Teilen Wasser, 0,1 Teil Natriumpyrophosphat, 100 Teilen einer Lösung von 9 Teilen Polyisobutylen mit einem Staudinger-Index von 28 [cm³/g], Glastemperatur -64°C (Oppanol B10 der BASF AG) in 91 Teilen Styrol, 7,5 Teilen Pentan, 0,15 Teilen tert.-Butylperoxid, 0,45 Teilen Benzoylperoxid und 4 Teilen einer 10 %igen wäßrigen Lösung von Polyvinylpyrrolidon unter Rühren auf 90°C erhitzt, 5 Stunden bei 90°C gehalten und anschließend 2 Stunden auf 100°C und weitere 2 Stunden auf 120°C erhitzt. Nach dem Abkühlen wurde das erhaltene Perlpolymerisat mit einem mittleren Teilchendurchmesser von ca 1 mm von der wäßrigen Phase abgetrennt, gewaschen und getrocknet.

Das erhaltene expandierbare Styrolpolymerisat wurde in einem handelsüblichen Rührvorschäumer, Typ Rauscher, mit strömendem Wasserdampf auf ein Schüttgewicht von ca. 30 g/l vorgeschäumt. Nach 24 Stunden Zwischenlagerung wurden die Schaumstoffpartikel in einer Blockform, Typ Rauscher, durch Bedampfung mit Wasserdampf und einem Druck von 1,8 bar zu einem Block der Dichte ca. 30 g/l verschweißt.

Zur Prüfung der Elastizität wurde an Proben des Schaumstoffblocks die Zugfestigkeit (DIN 53430) und der E-Modul (DIN 53426) gemessen. Die Ergebnisse sind in Tabelle 1 zusammengefaßt.

Beispiel 2

Es wurde wie in Beispiel 1 gearbeitet, jedoch eine Lösung von 11 Teilen Polyisobutylen in 89 Teilen Styrol verwendet.

Beispiel 3

Es wurde wie in Beispiel 1 gearbeitet, jedoch eine Lösung von 21,5 Teilen Polyisobutylen in 78,5 Teilen Styrol verwendet.

Beispiele 4 und 5

Es wurde wie in Beispiel 1 gearbeitet, jedoch eine Lösung von 11 (bzw. 21,5) Teilen Polyisobutylen mit einem Staudinger-Index von 38,5 (Oppanol B12 der BASF AG) in 89 (bzw. 78,5) Teilen Styrol verwendet.

Beispiele 6 bis 8

Es wurde wie in Beispiel 1 bis 3 gearbeitet, jedoch wurden bei der Polymerisation 0,01 Teile Divinylbenzol mitverwendet.

Beispiel 9 (Vergleich)

Es wurde wie in Beispiel 1 gearbeitet, jedoch wurden 100 Teile Styrol in Abwesenheit eines Elastomeren polymerisiert.

Tabelle 1

| Beispiel | Polyisobutylen | | Zugfestigkeit | E-Modul |
| | Gew.% | Staudinger-Index [cm³/g] | DIN 53430 [kp/cm²] | DIN 53426 [kg/cm²] |
|---|---|---|---|---|
| 1 | 9 | 28 | 4,6 | 210 |
| 2 | 11 | 28 | 5,5 | 224 |
| 3 | 21,5 | 28 | 6,4 | 241 |
| 4 | 11 | 38,5 | 6,3 | 239 |
| 5 | 21,5 | 38,5 | 6,9 | 249 |
| 6 | 9 | 28 | 5,2 | 220 |
| 7 | 11 | 28 | 5,7 | 228 |
| 8 | 21,5 | 28 | 6,7 | 250 |
| 9 (Vergleich) | – | – | 3,6 | 151 |

**Patentansprüche**

1. Expandierbare Styrolpolymerisate, enthaltend
   a) 50 bis 98 Gew.-% Polystyrol und/oder eines Styrolcopolymerisats mit mindestens 50 Gew.-% einpolymerisiertem Styrol
   b) 2 bis 50 Gew.-% eines styrollöslichen Elastomeren
   c) 1 bis 15 Gew.-%, bezogen auf die Summe von a) und b), eines niedrigsiedenden Treibmittels und gegebenenfalls
   d) übliche Zusatzstoffen in wirksamen Mengen,
   wobei Komponente b) ein Ethylen-Propylen-Kautschuk, Polyisobutylenkautschuk, Polyvinylether-Kautschuk, Acrylat-Kautschuk, Silikon-Kautschuk oder ein Polyurethan-Elastomeres ist, im wesentlichen unvernetzt ist und eine Glasübergangstemperatur unter 0°C aufweist.

2. Expandierbare Styrolpolymerisate nach Anspruch 1, dadurch gekennzeichnet, daß die Komponente a) unter Mitverwendung von 0,005 bis 0,05 Mol-% eines Vernetzers bezogen auf Styrol hergestellt worden ist.

3. Expandierbare Styrolpolymerisate nach Anspruch 1, dadurch gekennzeichnet, daß die Komponente a) ein mittleres Molekulargewicht $M_w$ (Gewichtsmittel) gemessen nach der GPC-Methode zwischen 100 000 und 200 000 aufweist.

4. Expandierbare Styrolpolymerisate nach Anspruch 3, dadurch gekennzeichnet, daß die hochmolekulare Flanke des nach der GPC-Methode gemessenen Molekulargewichtsverteilungskurve der Komponente a) so steil ist, daß die Differenz der Mittelwerte ($M_{Z+1}$-$M_Z$) weniger als 150 000 beträgt.

5. Expandierbare Styrolpolymerisate nach Anspruch 1, dadurch gekennzeichnet, daß die Komponente a) 0,1 bis 10 Gew.% Styrolpolymere mit einem mittleren Molekulargewicht (Gewichtsmittel) zwischen 500 und 5 000 enthält.

6. Expandierbare Styrolpolymerisate nach Anspruch 1, dadurch gekennzeichnet, daß die Komponente a) unter Mitverwendung von 0,01 bis 1,5 Gew.% einer bromfreien organischen Verbindung mit einer Kettenübertragungskonstante K zwischen 0,1 und 50 hergestellt worden ist.

7. Expandierbare Styrolpolymerisate nach einem der Ansprüche 1 bis 6 dadurch gekennzeichnet, daß die Komponente a) ein Styrol-Acrylnitril-Copolymeres mit einem Gehalt von 0,1 bis 2 Gew.% Acrylnitril oder ein Gemisch aus 95 bis 99,5 Gew.% Polystyrol und 0,5 bis 5 Gew.% eines styrollöslichen Styrol-Acrylnitril-Copolymeren mit einem Gesamtanteil an Acrylnitril im Gemisch von 0,1 bis 2 Gew.% ist.

8. Expandierbare Styrolpolymerisate nach einem der Ansprüche 1 bis 6, dadurch gekennzeichnet, daß die Komponente a) ein Styrol-Acrylnitril-Copolymeres mit einem Gehalt von 3 bis 20 Gew.% Acrylnitril oder ein Gemisch aus 50 bis 85 Gew.% Polystyrol und 15 bis 50 Gew.% eines styrollöslichen Styrol-Acrylnitril-Copolymeren mit einem Gesamtanteil an Acrylnitril im Gemisch von 3 bis 20 Gew.% ist.

9. Expandierbare Styrolpolymerisate nach einem der Ansprüche 1 bis 6, dadurch gekennzeichnet, daß die Komponente a) ein Gemisch aus Polystyrol und einem Styrol-Maleinsäure(anhydrid)-Copolymeren mit einem Gesamtanteil an Maleinsäure(anhydrid) von 2 bis 15 Gew.% ist.

10. Verfahren zur Herstellung von expandierbaren Styrolpolymerisaten gemäß Anspruch 1, dadurch gekennzeichnet, daß man das Elastomere in Styrol löst, in wäßriger Suspension polymerisiert und während oder nach der Polymerisation das Treibmittel zufügt.

11. Schaumstoffe der Dichte 0,01 bis 0,1 g/cm³, enthaltend
a) 50 bis 98 Gew.-% Polystyrol und/oder eines Styrolcopolymerisats mit mindestens 50 Gew.-% einpolymerisiertem Styrol
b) 2 bis 50 Gew.-% eines styrollöslichen Elastomeren sowie gegebenenfalls
c) übliche Zusatzstoffe in wirksamen Mengen, wobei Komponente b) ein Ethylen-Propylen-Kautschuk, Polyisobutylenkautschuk, Polyvinylether-Kautschuk, Acrylat-Kautschuk, Silikon-Kautschuk oder ein Polyurethan-Elastomeres ist, im wesentlichen unvernetzt ist und eine Glasübergangstemperatur unter 0°C aufweist.

12. Verfahren zur Herstellung von Schaumstoff-Formteilen, dadurch gekennzeichnet, daß man expandierbare Styrolpolymerisate gemäß Anspruch 1 in Partikelform durch Erhitzen auf eine Temperatur oberhalb des Erweichungspunktes expandiert und die erhaltenen Schaumstoffpartikel in nicht gasdicht schließenden Formen durch Erhitzen miteinander verschweißt.

## Claims

1. An expandable styrene polymer containing
a) from 50 to 98% by weight of polystyrene and/or of a styrene copolymer containing not less than 50% by weight of polymerized styrene,
b) from 2 to 50% by weight of a styrene-soluble elastomer,
c) from 1 to 15% by weight, based on the sum of a) and b), of a low boiling blowing agent and, if required,
d) conventional additives in effective amounts component b) being an ethylene/propylene rubber, polyisobutylene rubber, polyvinyl ether rubber, acrylate rubber, silicone rubber or polyurethane elastomer, being essentially noncrosslinked and having a glass transition temperature of less than 0°C.

2. An expandable styrene polymer as claimed in claim 1, wherein component a) has been prepared in the presence of from 0.005 to 0.05 mol % of a crosslinking agent based on styrene.

3. An expandable styrene polymer as claimed in claim 1, wherein component a) has a mean molecular weight $M_w$ (weight average) of from 100,000 to 200,000, measured by the GPC method.

4. An expandable styrene polymer as claimed in claim 3, wherein the high molecular weight slope of the molecular weight distribution curve of component a), measured by the GPC method, is so steep that the difference between the mean values ($M_{Z+1}$-$M_Z$) is less than 150,000.

5. An expandable styrene polymer as claimed in claim 1, wherein component a) contains from 0.1 to 10 % by weight of styrene polymers having a mean molecular weight (weight average) of from 500 to 5,000.

6. An expandable styrene polymer as claimed in claim 1, wherein component a) has been prepared in the presence of from 0.01 to 1.5% by weight of a bromine-free organic compound having a chain transfer constant K of from 0.1 to 50.

7. An expandable styrene polymer as claimed in any of claims 1 to 6, wherein component a) is a styrene/ acrylonitrile copolymer containing from 0.1 to 2% by weight of acrylonitrile or is a mixture of from 95 to 99.5 % by weight of polystyrene and from 0.5 to 5 % by weight of a styrene-soluble styrene/acrylonitrile copolymer having a total content of from 0.1 to 2% by weight of acrylonitrile in the mixture.

8. An expandable styrene polymer as claimed in any of claims 1 to 6, wherein component a) is a styrene/acrylonitrile copolymer containing from 3 to 20% by weight of acrylonitrile or is a mixture of from 50 to 85% by weight of polystyrene and from 15 to 50% by weight of a styrene-soluble styrene/acrylonitrile copolymer having a total content of from 3 to 20% by weight of acrylonitrile in the mixture.

9. An expandable styrene polymer as claimed in any of claims 1 to 6, wherein component a) is a mixture of polystyrene and a styrene/maleic acid or maleic anhydride copolymer having a total content of from 2 to 15% by weight of maleic acid or maleic anhydride.

10. A process for the preparation of an expandable styrene polymer as claimed in claim 1, wherein the elastomer is dissolved in styrene and polymerized in aqueous suspension, and the blowing agent is added during or after the polymerization.

11. A foam having a density of from 0.01 to 0.1 g/cm³ and containing
a) from 50 to 98% by weight of polystyrene and/or of a styrene copolymer containing not less than 50% by weight of polymerized styrene,
b) from 2 to 50% by weight of a styrene-soluble elastomer and, if required,
c) conventional additives in effective amounts component b) being an ethylene/propylene rubber, polyisobutylene rubber, polyvinyl ether rubber, acrylate rubber, silicone rubber or polyurethane elastomer, being essentially noncrosslinked and having a glass transition temperature of less than 0°C.

12. A process for the production of foam moldings, wherein an expandable styrene polymer as claimed in claim 1, in the form of particles, is expanded by heating above the softening point, and the resulting foam particles are welded to one another by heating in molds which close without a gas-tight seal.

## Revendications

1. Polymères expansibles du styrène, contenant
a) 50 à 98 % en poids de polystyrène et/ou d'un copolymère du styrène à au moins 50 % en poids de styrène polymérisé,
b) 2 à 50 % en poids d'un élastomère soluble dans le styrène,
c) 1 à 15 % en poids, par rapport à la somme de a) et b), d'un agent gonflant à bas point d'ébullition et le cas échéant
d) des additifs usuels aux proportions efficaces,
dans lesquels le composant b) est un caoutchouc d'éthylène-propylène, un caoutchouc de polyisobutylène, un caoutchouc d'éther polyvinylique, un caoutchouc d'acrylate, un caoutchouc de silicone ou un élastomère de polyuréthanne, il est essentiellement non réticulé et a une température de transition vitreuse inférieure à 0° C.

2. Polymères expansibles du styrène selon la revendication 1, caractérisés en ce que le composant a) a été préparé avec utilisation conjointe de 0,005 à 0,05 mol % d'un agent réticulant par rapport au styrène.

3. Polymères expansibles du styrène selon la revendication 1, caractérisés en ce que le composant a) a un poids moléculaire moyen $M_W$ (moyenne en poids) mesuré par la méthode de GPC, de 100 000 à 200 000.

4. Polymères expansibles du styrène selon la revendication 3, caractérisés en ce que le flanc a haut poids moléculaire de la courbe de répartition des poids moléculaires, mesurée par la méthode GPC, du composant a) est suffisamment raide pour que la différence des valeurs moyennes ($M_{Z+1}$-$M_Z$) soit inférieure à 150 000.

7

5. Polymères expansibles du styrène selon la revendication 1, caractérisés en ce que le composant a) contient de 0,1 à 10 % en poids de polymères du styrène ayant un poids moléculaire moyen (moyenne en poids) de 500 à 5 000.

6. Polymères expansibles du styrène selon la revendication 1, caractérisés en ce que le composant a) a été préparé avec utilisation conjointe de 0,01 à 1,5 % en poids d'un composé organique exempt de brome ayant une constante de transfert des chaînes K de 0,1 à 50.

7. Polymères expansibles du styrène selon une des revendications 1 à 6, caractérisés en ce que le composant a) est un copolymère styrène-acrylonitrile d'une teneur de 0,1 à 2 % en poids d'acrylonitrile ou un mélange de 95 à 99,5 % en poids de polystyrène et de 0,5 à 5 % en poids d'un copolymère styrène-acrylonitrile soluble dans le styrène avec une teneur totale en acrylonitrile de 0,1 à 2 % en poids dans le mélange.

8. Polymères expansibles du styrène selon une des revendications 1 à 6, caractérisés en ce que le composant a) est un copolymère styrène-acrylonitrile d'une teneur de 3 à 20 % en poids d'acrylonitrile ou un mélange de 50 à 85 % en poids de polystyrène et de 15 à 50 % en poids d'un copolymère-acrylonitrile soluble dans le styrène avec une teneur totale en acrylonitrile de 3 à 20 % en poids dans un mélange.

9. Polymères expansibles du styrène selon une des revendications 1 à 6, caractérisés en ce que le composant a) est un mélange de polystyrène et d'un copolymère styrène-acide (anhydride)-maléique d'une teneur totale en acide (anhydride)maléique de 2 à 15 % en poids.

10. Procédé de préparation de polymères expansibles du styrène selon la revendication 1, caractérisé en ce que l'on dissout l'élastomère dans le styrène, on polymérise en suspension aqueuse et on ajoute l'agent gonflant durant ou après la polymérisation.

11. Matières alvéolaires de densité 0,01 à 0,1 g/cm³, contenant
   a) 50 à 98 % en poids de polystyrène et/ou d'un copolymère du styrène à au moins 50 % en poids de styrène polymérisé,
   b) 2 à 50 - % en poids d'un élastomère soluble dans le styrène et le cas échéant
   d) des additifs usuels aux proportions efficaces, le composant b) étant un caoutchouc d'éthylène-propylène, un caoutchouc de polyisobutylène, un caoutchouc d'éther polyvinylique, un caoutchouc d'acrylate, un caoutchouc de silicone ou un élastomère de polyuréthanne, essentiellement non réticulé et ayant une température de transition vitreuse inférieure à 0° C.

12. Procédé pour la fabrication de pièces moulées en matière alvéolaire caractérisé en ce que l'on soumet des polymères expansibles du styrène selon la revendication 1, à l'état de particules, à expansion par chauffage à une température supérieure au point de ramollissement, et on soude les particules de matière alvéolaire ainsi obtenues entre elles par chauffage dans des moules non hermétiques aux gaz.